# EUROPEAN PATENT APPLICATION

(11) **EP 4 541 990 A1**
(43) Date of publication of application: **23.04.2025**
(21) Application number: 23902440.9
(22) Date of filing: 21.11.2023
(51) Int. Cl.: E05B 77/12, B60R 21/00, B60R 16/03

(54) **VEHICLE DOOR CONTROL METHOD AND APPARATUS, ELECTRONIC DEVICE, VEHICLE, AND READABLE STORAGE MEDIUM**

(30) Priority: 12.12.2022 CN 202211591859
(71) Applicant: Geely Automobile Research Institute (Ningbo) Co., Ltd., Ningbo, Zhejiang 315336 (CN)
(72) Inventor: WANG, Dong, Ningbo, Zhejiang 315336 (CN); TANG, Li, Ningbo, Zhejiang 315336 (CN); DENG, Xianpan, Ningbo, Zhejiang 315336 (CN); LV, Tingting, Ningbo, Zhejiang 315336 (CN); WU, Jing, Ningbo, Zhejiang 315336 (CN); WANG, Miao, Ningbo, Zhejiang 315336 (CN); WANG, Pengxiang, Ningbo, Zhejiang 315336 (CN); SUN, Yuehui, Ningbo, Zhejiang 315336 (CN); ZHOU, Dayong, Ningbo, Zhejiang 315336 (CN)
(74) Representative: Barker Brettell LLP
(86) International application number: PCT/CN2023/133092
(87) International publication number: WO 2024/125241

(57) **Abstract**

The present application provides a vehicle door control method and apparatus, an electronic device, a vehicle and a readable storage medium. The method includes: sending a driving unlocking instruction to a vehicle door unlocking control unit when receiving a vehicle collision signal, so that the vehicle door unlocking control unit controls a vehicle door unlocking, where the driving unlocking instruction is sent for at least three times; determining the number of sending times of the driving unlocking instruction; if the number of sending times is greater than a preset number of sending times, determining a current state of the vehicle door; and if the current state is an unlocked state, stopping sending the driving unlocking instruction to the vehicle door unlocking control unit. The method of the present application improves the reliability of the vehicle door when unlocking.

## Description

This application claims priority to Chinese Patent Application No. 202211591859.5, filed to the China National Intellectual Property Administration on December 12, 2022 and entitled "VEHICLE DOOR CONTROL METHOD AND APPARATUS, ELECTRONIC DEVICE, VEHICLE AND READABLE STORAGE MEDIUM", which is hereby incorporated by reference in its entirety.

### TECHNICAL FIELD

The present application relates to the technical field of vehicle door control and, in particular, to a vehicle door control method and apparatus, an electronic device, a vehicle and a readable storage medium.

### BACKGROUND

The collision safety performance of new energy vehicles has been widely concerned. Vehicle collisions are usually divided into a front collision, a side collision, a rear collision, a roll collision and a pedestrian collision and other situation. After a collision occurs, a vehicle door of the vehicle needs to be unlocked to facilitate passengers to escape and external rescues.

At present, when the new energy vehicle sends a collision, it usually sends an unlocking instruction to a motor of the vehicle door after receiving collision information signal, to control the vehicle door to automatically unlock, which is convenient for passengers to escape.

However, after the collision occurs for existing cars, there a problem may be exists that the reliability is not high when the vehicle door is unlocked.

Embodiments of the present application provide a vehicle door control method and apparatus, an electronic device, a vehicle and a readable storage medium, which are used for solving the problem that after the collision occurs, the reliability is not high when the vehicle door is unlocked.

In a first aspect, an embodiment of the present application provides a vehicle door control method, applied to a vehicle door control system, and including:
sending a driving unlocking instruction to a vehicle door unlocking control unit when receiving a vehicle collision signal, so that the vehicle door unlocking control unit controls a vehicle door unlocking, where the driving unlocking instruction is sent for at least three times;
determining the number of sending times of the driving unlocking instruction;
if the number of sending times is greater than a preset number of sending times, determining a current state of the vehicle door; and
if the current state is an unlocked state, stopping sending the driving unlocking instruction to the vehicle door unlocking control unit.

In combination with an implementation of the first aspect, after the receiving the vehicle collision signal and before the sending the driving unlocking instruction to the vehicle door unlocking control unit, the method further includes:
receiving the vehicle collision signal by a vehicle control unit in the vehicle door control system;
after the vehicle control unit receives the vehicle collision signal, changing a use mode of the vehicle control unit to a collision mode; and
after the use mode of the vehicle control unit is changed to the collision mode, sending the vehicle collision signal to a vehicle door control unit in the vehicle door control system by the vehicle control unit with a preset first sending duration, so that the vehicle door control unit sends the driving unlocking instruction for multiple times to the vehicle door unlocking control unit according to the vehicle collision signal to control the vehicle door unlocking.

In combination with an implementation of the first aspect, after the changing the use mode of the vehicle control unit to the collision mode, the method further includes:
if the vehicle control unit is restarted when sending the vehicle collision signal to the vehicle door control unit, controlling the restarted vehicle control unit to continue to send the vehicle collision signal to the vehicle door control unit.

In combination with an implementation of the first aspect, before the receiving the vehicle collision signal by the vehicle control unit in the vehicle door control system, the method further includes:
receiving the vehicle collision signal by a collision control unit in the vehicle door control system; and
after the collision control unit receives the vehicle collision signal, sending the vehicle collision signal to the vehicle control unit by the collision control unit with a preset second sending duration, so that the vehicle control unit receives the vehicle collision signal.

In combination with an implementation of the first aspect, a transmission manner of the vehicle collision signal between the collision control unit and the vehicle control unit includes a wired transmission and/or a wireless transmission.

In combination with an implementation of the first aspect, the method further includes:
if the number of sending times is less than the preset number of sending times, continuing to send the driving unlocking instruction to the vehicle door unlocking control unit.

In combination with an implementation of the first aspect, the method further includes:
judging a power supply state of a main power source, where the main power source is a power source connected with the vehicle door control system, the vehicle door unlocking control unit and the vehicle door; and
when the power supply state of the main power source is abnormal, controlling the vehicle door control system, the vehicle door unlocking control unit and the vehicle door to connect with a spare power source.

In a second aspect, the present application provides a vehicle door control apparatus, including:
a sending module, configured to send a driving unlocking instruction to a vehicle door unlocking control unit when receiving a vehicle collision signal, so that the vehicle door unlocking control unit controls a vehicle door unlocking, where the driving unlocking instruction is sent for at least three times;
a first determining module, configured to determine the number of sending times of the driving unlocking instruction;
a second determining module, configured to, if the number of sending times is greater than a preset number of sending times, determine a current state of the vehicle door; and
a stopping module, configured to, if the current state is an unlocked state, stop sending the driving unlocking instruction to the vehicle door unlocking control unit.

In a third aspect, the present application provides an electronic device, including a processor and a memory communicatively connected with the processor;
where the memory stores a computer program;
the processor executes the computer program stored in the memory to implement the vehicle door control method in the above embodiments.

In a fourth aspect, the present application provides a vehicle including a vehicle door control device.

In a fifth aspect, the present application provides a computer-readable storage medium, where the computer-readable storage medium stores a computer program, and the computer program, when executed by a processor, is configured to implement the vehicle door control method in the above embodiments.

In the vehicle door control method and apparatus, the computer program and the readable storage medium provided by the embodiments of the present application, by means of sending a driving unlocking instruction to a vehicle door unlocking control unit when receiving a vehicle collision signal, so that the vehicle door unlocking control unit controls a vehicle door unlocking, where the driving unlocking instruction is sent for at least three times; determining the number of sending times of the driving unlocking instruction; if the number of sending times is greater than a preset number of sending times, determining a current state of the vehicle door; and if the current state is an unlocked state, stopping sending the driving unlocking instruction to the vehicle door unlocking control unit, determine the current state of the vehicle door after sending the driving unlocking instruction for multiple times and ensuring that the driving unlocking instruction is sent for a certain number of times when the vehicle door control is performed, so as to improve the reliability of the vehicle door unlocking control when the vehicle collision occurs.

### BRIEF DESCRIPTION OF DRAWINGS

The accompanying drawings, which are incorporated in and constitute a part of this description, illustrate embodiments consistent with the present application, and use to explain the principles of the present application together with the description.
FIG. 1 is a schematic block diagram of a vehicle door control method in the prior art provided by an embodiment of the present application.
FIG. 2 is a schematic flowchart of a vehicle door control method provided by an embodiment of the present application.
FIG. 3 is a schematic flowchart of another vehicle door control method provided by an embodiment of the present application.
FIG. 4 is schematic block flowchart of a vehicle door control method provided by an embodiment of the present application.
FIG. 5 is a schematic structural diagram of a vehicle door control apparatus provided by an embodiment of the present application.
FIG. 6 is a schematic structural diagram of an electronic device provided by an embodiment of the present application.

Through the above drawings, clear embodiments of the present application have been illustrated, which will be described in more detail later. These drawings and written descriptions are not intended to limit the scope of the concept of the present application in any way, but to explain the concept of the present application to those skilled in the art by referring to specific embodiments.

### DESCRIPTION OF EMBODIMENTS

Exemplary embodiments will be described in detail here, examples of which are illustrated in the drawings. When the following description refers to the drawings, unless otherwise indicated, the same numbers in different drawings indicate the same or similar elements. The embodiments described in the following exemplary embodiments do not represent all embodiments consistent with the present application. On the contrary, they are merely examples of devices and methods consistent with some aspects of the present application as detailed in the appended claims.

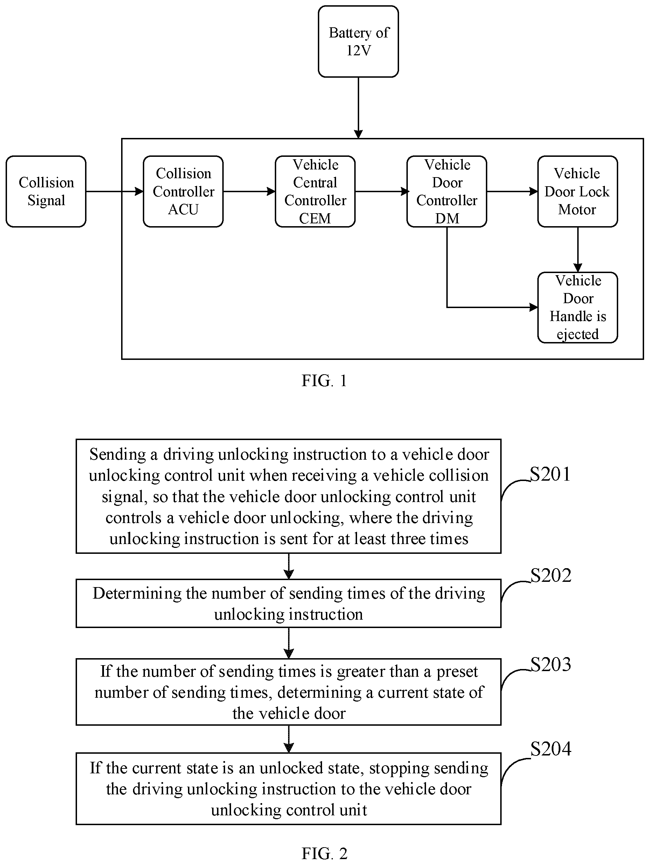

FIG. 1 is a schematic block diagram of a vehicle door control method in the prior art provided by an embodiment of the present application. As shown in FIG. 1, at present, after a vehicle collision occurs, a collision controller receives a collision signal and sends the collision signal to a vehicle door controller through a vehicle central controller, so that the vehicle door controller sends an unlocking instruction to a vehicle door unlocking control unit to control the vehicle door unlocking, an unlocking state is fed back when the vehicle door is unlocked, so that the vehicle door controller stops sending the unlocking instruction to the vehicle door unlocking control unit. However, since the reliability of various components on the vehicle may be reduced after the vehicle collision occurs, the vehicle door unlocking control unit may mistakenly trigger the unlocking state when it is used, which makes the vehicle door feedback the unlocking state when it is not unlocked and reduces the reliability of the vehicle door unlocking.

In order to solve the above problems, the embodiments of the present application provide a vehicle door control method and apparatus, an electronic device, a vehicle and a readable storage medium, which can send a driving unlocking instruction to a vehicle door unlocking control unit for multiple times when receiving a vehicle collision signal, determine a current state of the vehicle door after it is ensured that the instruction is sent for a certain number of times, and determine whether to continue to send the unlocking instruction according to the current state, thereby improving the reliability of the vehicle door unlocking.

The technical solutions of the present application and how the technical solutions of the present application can solve the above technical problems will be described in detail with specific embodiments. The following specific embodiments can be combined with each other, and the same or similar concepts or processes may not be repeated in some embodiments. The embodiments of the present application will be described below with reference to the drawings.

An execution subject of the vehicle door control method provided by the embodiment of the present application could be a server. The server could be a vehicle-mounted computer and other devices. In this embodiment, there is no particular restriction on the implementation of the execution subject, as long as the execution subject can send a driving unlocking instruction to a vehicle door unlocking control unit when receiving a vehicle collision signal, so that the vehicle door unlocking control unit controls a vehicle door unlocking, where the driving unlocking instruction is sent for at least three times; determine the number of sending times of the driving unlocking instruction; if the number of sending times is greater than a preset number of sending times, determine a current state of the vehicle door; and if the current state is an unlocked state, stop sending the driving unlocking instruction to the vehicle door unlocking control unit.

FIG. 2 is a schematic flowchart of a vehicle door control method provided by an embodiment of the present application. An execution subject of the method could be a server storing a vehicle door control system or other servers, and this embodiment is not particularly limited here. As shown in FIG. 2, the method can include the following steps.

S201, sending a driving unlocking instruction to a vehicle door unlocking control unit when receiving a vehicle collision signal, so that the vehicle door unlocking control unit controls a vehicle door unlocking, where the driving unlocking instruction is sent for at least three times.

The vehicle collision signal could be a signal generated when a vehicle collision occurs. For example, in some embodiments, the vehicle collision signal can be sent by a vehicle collision sensor, that is, after a front collision, a side collision, a rear collision, a roll collision, a pedestrian collision and other situation of the vehicle occur, the vehicle collision sensor can send the vehicle collision signal according to a collision intensity of the vehicle.

The vehicle door unlocking control unit could be an apparatus for controlling "unlocking" or "locking" of the vehicle door. In some embodiments, the vehicle door unlocking control unit can perform unlocking and locking of the vehicle door by receiving an "unlocking signal" or a "locking signal". When a vehicle collision accident occurs, the vehicle door needs to be in an unlocked state, which is convenient for passengers to open the vehicle door and leave the scene of the accident, avoid receiving other damages, or facilitate rescuers to rescue passengers in the vehicle.

The "unlocking signal" sent by the vehicle door unlocking control unit could be a driving unlocking instruction, and the vehicle door unlocking control unit can perform an unlocking operation on the vehicle door after receiving the driving unlocking instruction.

In order to avoid the unlocking operation from not being performed on the vehicle door due to a poor contact and other causes after the driving unlocking instruction is sent to the vehicle door unlocking control unit, the driving unlocking instruction can be sent to the vehicle door unlocking control unit for multiple times to ensure that the vehicle door unlocking control unit controls the vehicle door unlocking. In some embodiments, the driving unlocking instruction can be sent to the vehicle door unlocking control unit for more than two times by the vehicle door control system.

In the embodiment of the present application, after the receiving the vehicle collision signal and before the sending the driving unlocking instruction to the vehicle door unlocking control unit, the method can further include:
receiving the vehicle collision signal by a vehicle control unit in the vehicle door control system.

The vehicle control unit could be a CEM (Central Electronic Module, Central Electronic Module), the vehicle control unit can be used as a central processor of the vehicle, and the vehicle control unit can adjust parameters of various devices in the vehicle by receiving signals. In the embodiment of the present application, the vehicle control unit can receive the vehicle collision signal and send the vehicle collision signal to the vehicle door control unit.

The vehicle control unit can receive the vehicle collision signal by a collision control unit, and in the embodiment of the present application, before the receiving the vehicle collision signal by the vehicle control unit in the vehicle door control system, the method can further include:
receiving the vehicle collision signal by the collision control unit in the vehicle door control system; and
after the collision control unit receives the vehicle collision signal, sending the vehicle collision signal to the vehicle control unit by the collision control unit with a preset second sending duration, so that the vehicle control unit receives the vehicle collision signal.

The collision control unit could be an ACU (auto controled unite, collision controller), where in some embodiments, the collision control unit can be a vehicle collision sensor. After the vehicle is collided, the collision control unit can send the vehicle collision signal according to a collision intensity of the vehicle and send the vehicle collision signal to the vehicle control unit.

The second sending duration could refer to a duration that the collision control unit sends the vehicle collision signal to the vehicle control unit, where the second sending duration could be arbitrarily set as required, which is mainly used to ensure that the collision control unit stably sends the vehicle collision signal to the vehicle control unit. In the embodiment of the present application, the second sending duration could be 4 seconds or other set seconds.

In the embodiment of the present application, a transmission manner of the vehicle collision signal between the collision control unit and the vehicle control unit includes a wired transmission and/or a wireless transmission. The wired transmission could include a transmission of the vehicle collision signal in a form of a PWM (Pulse Width Modulation) signal. The wireless transmission could include a transmission of the vehicle collision signal using a CAN (Controller Area Network) network. In use, when the collision control unit sends the vehicle collision signal to the vehicle control unit, the wired transmission and the wireless transmission can be adopted at the same time.

After the vehicle control unit receives the vehicle collision signal, changing a use mode of the vehicle control unit to a collision mode.

The vehicle control unit could include a normal driving mode and a collision mode. The collision mode is a mode to which the vehicle control unit switches from the normal driving mode after the vehicle collision occurs. When the vehicle control unit is in the collision mode, the vehicle control unit can send the vehicle collision signal to the vehicle door control unit and record a current state of sending the vehicle collision signal.

After the vehicle collision occurs, due to phenomena such as a high acceleration and a deformation of the vehicle body, for the whole vehicle, the vehicle with a low voltage will outage or the voltage thereof will drop for a short time at the moment of the collision, so that the vehicle control unit will restart due to the voltage drop when in use. In order to ensure that the vehicle control unit can also send the vehicle collision signal to the vehicle door control unit after restarting, in the embodiment of the present application, the vehicle door control method can further include:
if the vehicle control unit is restarted when sending the vehicle collision signal to the vehicle door control unit, controlling the restarted vehicle control unit to continue to send the vehicle collision signal to the vehicle door control unit.

When the vehicle control unit is in the collision mode, the vehicle control unit can store the current state, for example, the preset first sending duration is 10 seconds. When the vehicle collision signal is sent by the vehicle control unit to the vehicle door control unit for 5 seconds, after restarting due to the voltage drop problem, the vehicle control unit can continue to send the vehicle collision signal to the vehicle door control unit after the restarting, until a sending duration meets the requirement of the preset first sending duration.

After the use mode of the vehicle control unit is changed to the collision mode, sending the vehicle collision signal to a vehicle door control unit in the vehicle door control system by the vehicle control unit with a preset first sending duration, so that the vehicle door control unit sends the driving unlocking instruction to the vehicle door unlocking control unit according to the vehicle collision signal to control the vehicle door unlocking.

The vehicle door control unit could be a DM (Door module, four-door control module), which can be configured to control a use state of four doors of the vehicle, such as "unlocking" and "locking" of the vehicle doors and "opening" and "closing" of the vehicle windows. In the embodiment of the present application, the vehicle door control unit can generate the driving unlocking instruction through the vehicle collision signal and send the driving unlocking instruction to the vehicle door unlocking control unit.

The first sending duration could refer to a duration that the collision control unit sends the vehicle collision signal to the vehicle control unit, where the first sending duration could be arbitrarily set as required, which is mainly used to ensure that the collision control unit stably sends the vehicle collision signal to the vehicle control unit. In the embodiment of the present application, the first sending duration could be 10 seconds or other set seconds.

The first sending duration and the second sending duration could be set to be the same duration, could also be set to be different duration.

In the embodiment of the present application, the vehicle collision signal could be sent between the vehicle control unit and the vehicle door control unit by the CAN network.

S202, determining the number of sending times of the driving unlocking instruction.

The number of sending times can refer to the number of times that the vehicle door unlocking control unit has sent the driving unlocking instruction. In some embodiments, the driving unlocking instruction can be sent at a predetermined frequency when being sent. For example, the driving unlocking instruction is sent to the vehicle door unlocking control unit at an interval of 3 seconds. In the embodiment of the present application, the driving unlocking instruction can be sent by the vehicle door control unit, and the vehicle door control unit can send the driving unlocking instruction to the vehicle door unlocking control unit at an interval of 2 seconds according to the vehicle collision signal after receiving the vehicle collision signal. The vehicle collision signal sending the driving unlocking instruction can be obtained and counted by a counting module.

S203, if the number of sending times is greater than a preset number of sending times, determining a current state of the vehicle door.

The preset number of sending times is a preset number of times. When the number of sending times is greater than the preset number of sending times, the current state of the vehicle door is obtained, where the current state could refer to whether the vehicle door is currently in a "locked state" or a "state". In some embodiments, the preset number of sending times is 1, when the number of sending times is 2, the current state of the vehicle door can be determined by the vehicle door control unit; or the preset number of sending times is 3, when the number of sending times is 4, the current state of the vehicle door can be determined by the vehicle door control unit.

In order to avoid the vehicle door switch mistakenly triggering the unlocked state and mistakenly triggering the locked state, the preset number of sending times is required to be set, when the number of sending times is greater than the preset number of sending times, the current state of the vehicle door is obtained to control the vehicle door more accurately and reliably.

In this embodiment, the vehicle door control method can further include:
if the number of sending times is less than the preset number of sending times, continuing to send the driving unlocking instruction to the vehicle door unlocking control unit.

The number of sending times being less than the preset number of sending times means that the number of times of sending the driving unlocking instruction does not meet the requirement of the preset number of sending times. For example, the preset number of sending times is 3 while the number of sending times is 2.

S204, if the current state is an unlocked state, stopping sending the driving unlocking instruction to the vehicle door unlocking control unit.

The unlocked state means that a passenger or a rescuer can directly open the vehicle door. For example, in some embodiments, the unlocked state of the vehicle door could include that the vehicle door switch is opened and the vehicle door handle is ejected.

Stopping sending the driving unlocking instruction to the vehicle door unlocking control unit means that after the number of sending times is greater than the preset number of sending times, the vehicle door control system does not need to send the driving unlocking instruction to the vehicle door unlocking control unit when the vehicle door is in the unlocked state.

In the embodiment of the present application, the vehicle door control method can further include: if the current state is the locked state, continuing to send the driving unlocking instruction to the vehicle door unlocking control unit.

When the number of sending times is greater than the preset number of sending times, if the current state is still in the locked state, the driving unlocking instruction is continuously sent to the vehicle door unlocking control unit to unlock the vehicle door. In some embodiments, in order to ensure the life time of the vehicle door unlocking control unit, the number of times of sending the driving unlocking instruction could be set to 10 times, where the preset number of sending times could be set to 3 times.

In the embodiment of the present application, the vehicle door control method can further include:
judging a power supply state of a main power source, where the main power source is a power source connected with the vehicle door control system, the vehicle door unlocking control unit and the vehicle door; and
when the power supply state of the main power source is abnormal, controlling the vehicle door control system, the vehicle door unlocking control unit and the vehicle door to connect with a spare power source.

The main power source is a main power source arranged in the vehicle for supplying power to the vehicle door control system, the vehicle door unlocking control unit and the vehicle door.

The power supply status of the main power source includes "normal" and "abnormal", where the "normal" can mean that the main power source is connected smoothly with the vehicle door control system, the vehicle door unlocking control unit and the vehicle door, and the "abnormal" can mean that the connection between the main power source with the vehicle door control system, the vehicle door unlocking control unit and the vehicle door is interrupted. In the embodiment of the present application, the power supply state of the main power source can be determined by a voltage detection apparatus connected between the main power source with the vehicle door control system, the vehicle door unlocking control unit and the vehicle door, and when the main power source cannot supply power due to the collision, the spare power source is configured to supply power.

The spare power source is a spare power source set in the vehicle to supply power to the vehicle door control system, the vehicle door unlocking control unit and the vehicle door, the spare power source is used after the main power source cannot supply power normally. In some embodiments, the main power source and the spare power source may independent from each other.

In the embodiment of the present application, the spare power source can be respectively connected with each unit in the vehicle door control system, the vehicle door unlocking control unit and the vehicle door. In some embodiments, in order to reduce the cost and ensure that the vehicle door can be unlocked normally and reliably, the spare power source can also only be electrically connected with the vehicle door unlocking control unit and the vehicle door, thus ensuring the execution of the vehicle door unlocking action.

In the embodiment of the present application, a driving unlocking instruction can be sent to a vehicle door unlocking control unit when a vehicle collision signal is received, so that the vehicle door unlocking control unit controls a vehicle door unlocking; the number of sending times of the driving unlocking instruction is determined, where the driving unlocking instruction is sent for at least three times; if the number of sending times is greater than a preset number of sending times, a current state of the vehicle door is determined; and if the current state is an unlocked state, it is stopped to send the driving unlocking instruction to the vehicle door unlocking control unit. The embodiment of the present application can determine the current state of the vehicle door after sending the driving unlocking instruction for multiple times and ensuring that the driving unlocking instruction is sent for a certain number of times when the vehicle door control is performed, so as to improve the reliability of the vehicle door unlocking control when the vehicle collision occurs.

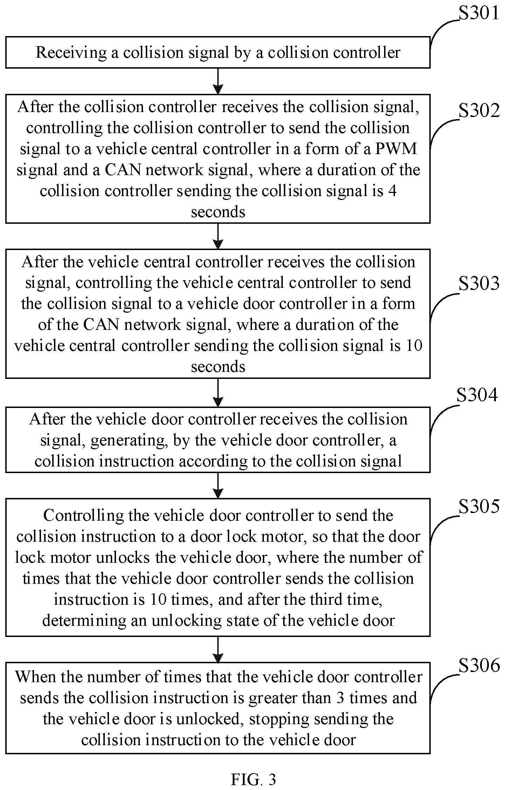

FIG. 3 is a schematic flowchart of another vehicle door control method provided by an embodiment of the present application, as shown in FIG. 3, the method can include:
S301, receiving a collision signal by a collision controller;
S302, after the collision controller receives the collision signal, controlling the collision controller to send the collision signal to a vehicle central controller in a form of a PWM signal and a CAN network signal, where a duration of the collision controller sending the collision signal is 4 seconds;
S303, after the vehicle central controller receives the collision signal, controlling the vehicle central controller to send the collision signal to a vehicle door controller in a form of the CAN network signal, where a duration of the vehicle central controller sending the collision signal is 10 seconds;
S304, after the vehicle door controller receives the collision signal, generating, by the vehicle door controller, a collision instruction according to the collision signal;
S305, controlling the vehicle door controller to send the collision instruction to a door lock motor, so that the door lock motor unlocks the vehicle door, where the number of times that the vehicle door controller sends the collision instruction is 10 times, and after the third time, determining an unlocking state of the vehicle door; and
S306, when the number of times that the vehicle door controller sends the collision instruction is greater than 3 times and the vehicle door is unlocked, stopping sending the collision instruction to the vehicle door.

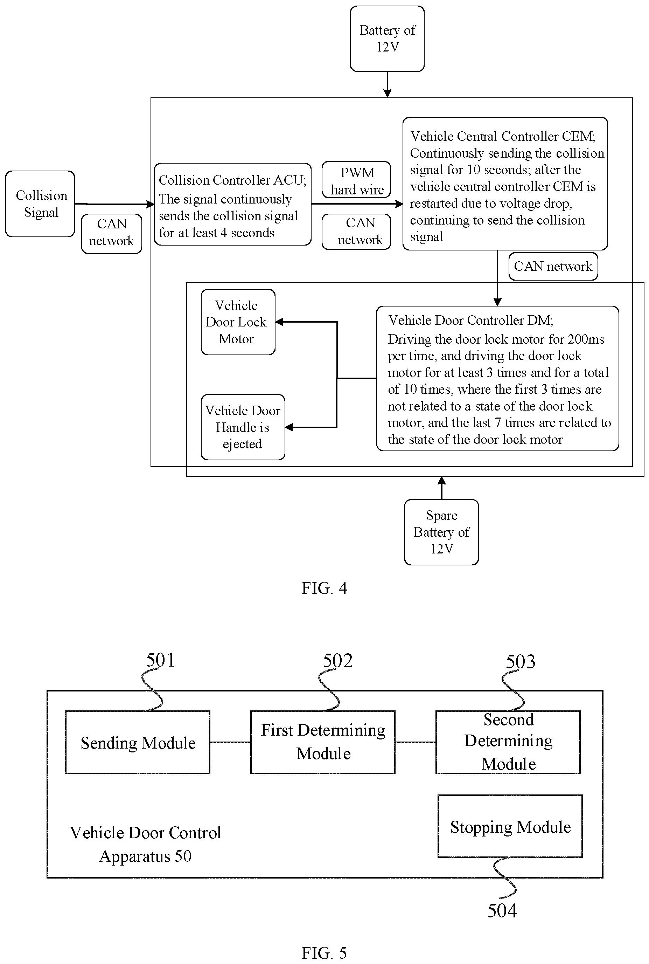

FIG. 4 is schematic block flowchart of a vehicle door control method provided by an embodiment of the present application, as shown in FIG. 4, a process may include the following:
a collision signal is transmitted to a collision controller ACU through a CAN network; the collision controller ACU continuously sends the collision signal to a vehicle central controller CEM for at least 4 seconds through a PWM hard wire and the CAN network; the vehicle central controller CEM continuously sends the collision signal to a vehicle door controller DM for 10 seconds through the CAN network, where after the vehicle central controller CEM is restarted due to voltage drop, it is continued to send the collision signal; the vehicle door controller DM drives a door lock motor for 200ms per time, and drives the door lock motor for at least 3 times and for a total of 10 times, where the first 3 times are not related to a state of the door lock motor, and the last 7 times are related to the state of the door lock motor; the door lock motor drives a vehicle door lock motor to open and drives a vehicle door handle to eject.

A main battery is connected with the collision controller ACU, the vehicle central controller CEM, the vehicle door controller DM, the door lock motor, the vehicle door lock motor and the vehicle door handle, and a spare battery is connected with the door lock motor, the vehicle door lock motor and the vehicle door handle.

Therefore, the embodiment of the present application can ensure that the collision signal can be transmitted accurately and reliably when being transmitted, and when the vehicle door is unlocked, it can avoid that the vehicle door cannot be opened since the vehicle door being not in the unlocked state feeds back the unlocked state, so as to improve the reliability of the vehicle door unlocking control when the vehicle collision occurs.

FIG. 5 is a schematic structural diagram of a vehicle door control apparatus provided by an embodiment of the present application. As shown in FIG. 5, the vehicle door control apparatus includes: a sending module 501, a first determining module 502, a second determining module 503 and a stopping module 504, where
the sending module 501 is configured to send a driving unlocking instruction to a vehicle door unlocking control unit when receiving a vehicle collision signal, so that the vehicle door unlocking control unit controls a vehicle door unlocking, where the driving unlocking instruction is sent for at least three times;
the first determining module 502 is configured to determine the number of sending times of the driving unlocking instruction;
the second determining module 503 is configured to, if the number of sending times is greater than a preset number of sending times, determine a current state of the vehicle door; and
the stopping module 504 is configured to, if the current state is an unlocked state, stop sending the driving unlocking instruction to the vehicle door unlocking control unit.

In the embodiment of the present application, the sending module 501 is further configured to:
receive the vehicle collision signal by a vehicle control unit in a vehicle door control system;
after the vehicle control unit receives the vehicle collision signal, change a use mode of the vehicle control unit to a collision mode; and
after the use mode of the vehicle control unit is changed to the collision mode, send the vehicle collision signal to a vehicle door control unit in the vehicle door control system by the vehicle control unit with a preset first sending duration, so that the vehicle door control unit sends the driving unlocking instruction for multiple times to the vehicle door unlocking control unit according to the vehicle collision signal to control the vehicle door unlocking.

In the embodiment of the present application, the sending module 501 is further configured to:
if the vehicle control unit is restarted when sending the vehicle collision signal to the vehicle door control unit, control the restarted vehicle control unit to continue to send the vehicle collision signal to the vehicle door control unit.

In the embodiment of the present application, the sending module 501 is further configured to:
receive the vehicle collision signal by a collision control unit in the vehicle door control system; and
after the collision control unit receives the vehicle collision signal, send the vehicle collision signal to the vehicle control unit by the collision control unit with a preset second sending duration, so that the vehicle control unit receives the vehicle collision signal.

In the embodiment of the present application, the sending module 501 is further configured to: a transmission manner of the vehicle collision signal between the collision control unit and the vehicle control unit includes a wired transmission and/or a wireless transmission.

In the embodiment of the present application, the sending module 501 is further configured to:
if the number of sending times is less than the preset number of sending times, continue to send the driving unlocking instruction to the vehicle door unlocking control unit.

In the embodiment of the present application, the sending module 501 is further configured to:
Judge a power supply state of a main power source, where the main power source is a power source connected with the vehicle door control system, the vehicle door unlocking control unit and the vehicle door; and
when the power supply state of the main power source is abnormal, control the vehicle door control system, the vehicle door unlocking control unit and the vehicle door to connect with a spare power source.

As can be seen from the above, in the vehicle door control apparatus of this embodiment, a sending module 501 is configured to send a driving unlocking instruction to a vehicle door unlocking control unit when receiving a vehicle collision signal, so that the vehicle door unlocking control unit controls a vehicle door unlocking, where the driving unlocking instruction is sent for at least three times; a first determining module 502 is configured to determine the number of sending times of the driving unlocking instruction; a second determining module 503 is configured to, if the number of sending times is greater than a preset number of sending times, determine a current state of the vehicle door; and a stopping module 504 is configured to, if the current state is an unlocked state, stop sending the driving unlocking instruction to the vehicle door unlocking control unit. Therefore, the current state of the vehicle door is determined after sending the driving unlocking instruction for multiple times and ensuring that the driving unlocking instruction is sent for a certain number of times when the vehicle door control is performed, so as to improve the reliability of the vehicle door unlocking control when the vehicle collision occurs.

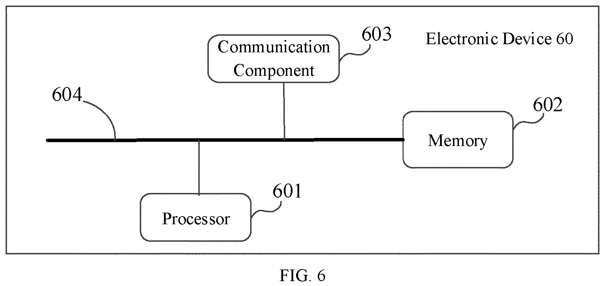

FIG. 6 is a schematic structural diagram of an electronic device provided by an embodiment of the present application. As shown in FIG. 6, the electronic device includes:
a processor 601 of one or more processing cores, a memory 602 of one or more computer-readable storage media, a communication component 603 and other components. The processor 601, the memory 602 and the communication component 603 are connected by a bus 604.

In a specific implementation process, at least one processor 601 is configured to execute computer-executed instructions stored in the memory 602, so that the at least one processor 601 executes the vehicle door control method as described above.

The specific implementation process of the processor 601 can be referred to the above method embodiment, and its implementation principle and technical effect are similar, so this embodiment will not be repeated here.

In the above embodiment shown in FIG. 6, it should be understood that the processor could be a central processing unit (Central Processing Unit, CPU for short), other general processors, a digital signal processor (Digital Signal Processor, DSP for short), an application specific integrated circuit (Application Specific Integrated Circuit, ASIC for short), etc. A general processor could be a microprocessor or the processor could be any conventional processor, etc. The steps of the method disclosed in combination with the invention can be directly embodied as an execution being complete by a hardware processor, or an execution being complete by a combination of hardware and software modules in the processor.

The memory may include a random access memory (RAM for short) and a non-volatile memory (Non-volatile Memory, NVM for short), such as at least one disk memory.

The bus could be an industry standard architecture (Industry Standard Architecture, ISA for short) bus, a peripheral component interconnection (Peripheral Component, PCI for short) bus or an extended industry standard architecture (Extended Industry Standard Architecture, EISA for short) bus. The bus could be divided into an address bus, a data bus and a control bus. For the convenience of representation, the bus in the drawings of the present application is not limited to only one bus or one type of bus.

In some embodiments, a computer program product is further provided, including a computer program or instructions, the computer program or instructions, when executed by a processor, implement the steps in any of the above vehicle door control methods.

The specific implementation of the above operations can be found in the previous embodiments, and will not be repeated here.

It can be understood by those skilled in the art that all or part of the steps in various methods of the above embodiments can be completed by instructions or by controlling, by instructions, related hardware, the instructions can be stored in a computer-readable storage medium, and be loaded and executed by a processor.

Therefore, the embodiment of the present application provides a computer-readable storage medium, in which a plurality of instructions are stored, and the instructions can be loaded by a processor to execute the steps in any one of the vehicle door control methods provided by the embodiments of the present application.

The storage medium could include a read only memory (ROM for short, Read Only Memory), a random access memory (RAM for short, Random Access Memory), a magnetic disk or an optical disk, etc.

According to one aspect of the present application, a computer program product or a computer program is provided, the computer program product or the computer program includes computer instructions, and the computer instructions are stored in a computer-readable storage medium.

Due to the instructions stored in the storage medium, the steps in any one of the vehicle door control methods provided by the embodiments of the present application can be executed, therefore the beneficial effects achievable by any one of the vehicle door control methods provided in the embodiments of the present application can be realized. See the previous embodiments for details, and it will not be repeated here.

After those skilled in the art consider the specification and practicing the invention disclosed herein, other embodiments of the present application will be easily considered. The present application is intended to cover any variations, uses or adaptive changes of the present application, these variations, uses or adaptive changes follow general principles of the present application and include common sense or common technical means in the art that are not disclosed in the present application. The specification and embodiment are to be regarded as exemplary only, and the true scope and spirit of the present application are indicated by the following claims.

It should be understood that the present application is not limited to the precise structures described above and shown in the drawings, and various modifications and changes can be made without departing from its scope. The scope of the present application is limited only by the appended claims.

## Claims

1. A vehicle door control method, applied to a vehicle door control system, and comprising:
sending a driving unlocking instruction to a vehicle door unlocking control unit when receiving a vehicle collision signal, so that the vehicle door unlocking control unit controls a vehicle door unlocking, wherein the driving unlocking instruction is sent for at least three times;
determining a number of sending times of the driving unlocking instruction;
if the number of sending times is greater than a preset number of sending times, determining a current state of the vehicle door; and
if the current state is an unlocked state, stopping sending the driving unlocking instruction to the vehicle door unlocking control unit.

2. The method according to claim 1, after the receiving the vehicle collision signal and before the sending the driving unlocking instruction to the vehicle door unlocking control unit, further comprising:
receiving the vehicle collision signal by a vehicle control unit in the vehicle door control system;
after the vehicle control unit receives the vehicle collision signal, changing a use mode of the vehicle control unit to a collision mode; and
after the use mode of the vehicle control unit is changed to the collision mode, sending the vehicle collision signal to a vehicle door control unit in the vehicle door control system by the vehicle control unit with a preset first sending duration, so that the vehicle door control unit sends the driving unlocking instruction to the vehicle door unlocking control unit according to the vehicle collision signal to control the vehicle door unlocking.

3. The method according to claim 2, after the changing the use mode of the vehicle control unit to the collision mode, further comprising:
if the vehicle control unit is restarted when sending the vehicle collision signal to the vehicle door control unit, controlling the restarted vehicle control unit to continue to send the vehicle collision signal to the vehicle door control unit.

4. The method according to claim 2, before the receiving the vehicle collision signal by the vehicle control unit in the vehicle door control system, further comprising:
receiving the vehicle collision signal by a collision control unit in the vehicle door control system; and
after the collision control unit receives the vehicle collision signal, sending the vehicle collision signal to the vehicle control unit by the collision control unit with a preset second sending duration, so that the vehicle control unit receives the vehicle collision signal.

5. The method according to claim 4, wherein a transmission manner of the vehicle collision signal between the collision control unit and the vehicle control unit comprises a wired transmission and/or a wireless transmission.

6. The method according to claim 1, further comprising:
if the number of sending times is less than the preset number of sending times, continuing to send the driving unlocking instruction to the vehicle door unlocking control unit.

7. The method according to claim 1, further comprising:
judging a power supply state of a main power source, wherein the main power source is a power source connected with the vehicle door control system, the vehicle door unlocking control unit and the vehicle door; and
when the power supply state of the main power source is abnormal, controlling the vehicle door control system, the vehicle door unlocking control unit and the vehicle door to connect with a spare power source.

8. A vehicle door control apparatus, comprising:
a sending module, configured to send a driving unlocking instruction to a vehicle door unlocking control unit when receiving a vehicle collision signal, so that the vehicle door unlocking control unit controls a vehicle door unlocking, wherein the driving unlocking instruction is sent for at least three times;
a first determining module, configured to determine the number of sending times of the driving unlocking instruction;
a second determining module, configured to, if the number of sending times is greater than a preset number of sending times, determine a current state of the vehicle door; and
a stopping module, configured to, if the current state is an unlocked state, stop sending the driving unlocking instruction to the vehicle door unlocking control unit.

9. An electronic device, comprising: a processor and a memory communicatively connected with the processor;
wherein the memory stores a computer program;
the processor executes the computer program stored in the memory to implement the vehicle door control method according to any one of claims 1 to 7.

10. A vehicle, comprising: the vehicle door control apparatus according to claim 8.

11. A computer-readable storage medium, wherein the computer-readable storage medium stores a computer program, and the computer program, when executed by a processor, is configured to implement the vehicle door control method according to any one of claims 1 to 7.
